# FASCICULE DE BREVET EUROPEEN

(11) **EP 2 449 914 B1**
(45) Date de publication et mention de la délivrance du brevet: **08.10.2014**
(21) Numéro de dépôt: 11306432.3
(22) Date de dépôt: 04.11.2011
(51) Int. Cl.: A45D 1/04, A45D 2/00, B01J 47/02, A45D 1/00, A45D 2/40

(54) **Appareil de coiffure à vapeur compose d'une base et d'une unité portable**
Dampfhaarpflegegerät, bestehend aus einer Basisstation und einer tragbaren Einheit
Steam hairdressing appliance made up of a base and a portable unit

(30) Priorité: 05.11.2010 FR 1059123
(43) Date de publication de la demande: 09.05.2012
(73) Titulaire: SEB S.A., 69130 Ecully (FR)
(72) Inventeur: Tougouchi, Jérôme, 42800 GENILAC (FR); Maisonneuve, Martial, 38090 VILLEFONTAINE (FR); Vacherion, Xavier, 69740 GENAS (FR)
(74) Mandataire: Guéry-Jacques, Géraldine

(56) Documents cités:
- EP-A1- 0 659 363
- EP-A1- 1 835 067
- FR-A1- 2 802 195
- US-A1- 2009 183 382

## Description

### Domaine technique de l'invention

La présente invention concerne un appareil de coiffure utilisant de la vapeur et destiné à la mise en forme par contact avec les cheveux, notamment destiné au lissage, au bouclage ou au gaufrage des cheveux d'une personne.

### Etat de la technique antérieure :

On connaît traditionnellement deux types d'appareils de coiffure permettant le lissage ou le bouclage ou le gaufrage dont les surfaces venant pincer les cheveux sont planes ou courbes ou accidentées et sont chauffées ou chauffantes.

Les appareils du type pinces à lisser ou à boucler ou à gaufrer comportent généralement deux mâchoires pivotantes comprenant chacune une extrémité supportant une surface de traitement, au moins l'une des surfaces de traitement étant chauffée, l'autre étant prévue pour amener les cheveux en contact avec la première, notamment en passant d'une position d'ouverture des mâchoires permettant l'insertion des cheveux à une position de fermeture pour leur mise en contact avec la partie chauffante.

L'autre extrémité des mâchoires forme deux demi-poignées faisant office de zone de préhension et permettant de passer de la position d'ouverture à celle de fermeture. Le passage se fait manuellement en pressant les deux demi-poignées articulées de l'appareil l'une vers l'autre pour amener les surfaces de traitement au contact des cheveux. Le lissage d'une mèche de cheveux s'effectue en déplaçant l'appareil le long de cette mèche, de la racine vers la pointe. Le bouclage d'une mèche de cheveux se fait en enroulant au moins partiellement la mèche autour de la ou des surfaces de traitement et en appliquant de la chaleur pour fixer la boucle principalement en statique.

Il est prévu dans de tels appareils, pour améliorer la mise en forme des cheveux, d'utiliser additionnellement de la vapeur projetée sur les cheveux. WO2007141276 décrit un fer à cheveux avec un générateur de vapeur déporté dans une base. La vapeur est produite entièrement et uniquement dans la base génératrice de vapeur, et amenée via un cordon de passage de vapeur dans un lisseur portable pour sortir au travers de la partie perforée de l'appareil de coiffure. De façon similaire, EP 0659363 décrit un appareil de coiffure comportant un générateur externe de vapeur qui permet de véhiculer toute sorte de vapeur nécessaire au travail des cheveux. Un cordon 13 reliant l'appareil de coiffure à sa base comporte au moins un tuyau pour le passage de la vapeur, les câbles électriques sont inclus dans le même ensemble. Dans ces deux documents, la vapeur est formée dans la base et amenée via un cordon au lisseur portable. Ceci présente plusieurs inconvénients notamment l'effet de condensat : la vapeur formée et acheminée peut refroidir dans le cordon d'amenée à l'appareil portable, et l'appareil portable éjectera un mélange vapeur-eau chaude, l'eau chaude étant dangereuse si elle est projetée sur le cuir chevelu de l'utilisateur.

US20090183382 décrit un appareil à coiffure d'un autre type car il s'agit d'un sèche-cheveux à unité externe capable de délivrer en sortie de l'air chaud et/ou de la vapeur et/ou de la brume. Une unité de base comprend un réservoir d'eau et une pompe, cette unité comporte un réservoir qui alimente en liquide via un cordon le sèche-cheveux portable. La vapeur peut être créée par un élément de chauffage autour de la canalisation dans le sèche-cheveux. Néanmoins cet appareil a pour but de sécher les cheveux sans les déshydrater en ajoutant dans l'air chaud de la brume ou de la vapeur : cet appareil n'a pas pour but de former les cheveux via au moins une surface de traitement destinée à être en contact avec les cheveux.

Par ailleurs, le problème écologique de remplacement de tels appareils ne s'est encore jamais posé, avec le problème sous-tendu d'augmenter la durée de vie du produit afin de le garder le plus longtemps possible et de le jeter le plus tard possible.

A la connaissance de la demanderesse, aucun appareil de mise en forme par contact avec les cheveux utilisant de la vapeur ne comporte de moyens compacts, robustes, automatiques, simples de conception, sécuritaires à longue durée de vie, permettant un traitement des cheveux de qualité et respectant la fibre capillaire.

### Exposé de l'invention:

Le but de la présente invention est de remédier au moins en partie aux inconvénients précités et de proposer un appareil de mise en forme des cheveux utilisant de la vapeur et comportant des moyens compacts, automatiques, permettant d'assurer un traitement de qualité des cheveux, et augmentant la durée de vie du produit.

Un autre but de l'invention est un appareil de mise en forme par contact avec les cheveux utilisant de la vapeur apte à commander de manière fiable, au moins un des paramètres de fonctionnement de la vapeur.

Un autre but de l'invention est un appareil de mise en forme par contact avec les cheveux utilisant de la vapeur pouvant assurer un débit continu voire constant de vapeur, correspondant à la consigne de commande.

Un autre but de l'invention est un appareil de mise en forme par contact avec les cheveux utilisant de la vapeur qui soit solide, robuste en fonctionnement et assure un bon vieillissement par rapport aux déformations mécaniques par exemple.

Un autre but de l'invention est un appareil de mise en forme par contact avec les cheveux utilisant de la vapeur qui soit efficace et/ou rapide en fonctionnement.

Un autre but de l'invention est un appareil de mise en forme par contact avec les cheveux utilisant de la vapeur qui permette une utilisation aisée et pratique. Un autre but de l'invention est un appareil de mise en forme par contact avec les cheveux utilisant de la vapeur et des éléments additionnels jetables qui soient simples de conception, peu couteux de conception.

Un autre but de l'invention est un appareil de mise en forme par contact avec les cheveux utilisant de la vapeur qui soit sécurisé.

Ces buts sont atteints avec un appareil à vapeur destiné à la mise en forme des cheveux comprenant: une base comportant un réservoir principal de fluide, une unité portable pour la mise en forme des cheveux, déportée de la base, l'unité comportant des moyens de distribution de la vapeur à destination des cheveux, un cordon comportant au moins une canalisation destinée à mettre en communication de fluide la base et l'unité portable, des moyens de vaporisation du fluide où la base comporte des moyens de déminéralisation du fluide agencés en amont du réservoir principal. Cet agencement et cet usage des moyens de déminéralisation permettent de réduire le degré de dureté du fluide brut utilisé en entrée de l'appareil. Une telle déminéralisation permet d'épurer le fluide brut, de le décarbonater, c'est-à-dire d'enlever le tartre (CaCo3) du fluide, par exemple de l'eau brute du robinet introduite dans l'appareil par l'utilisateur.

Selon l'invention, les moyens de déminéralisation peuvent comprendre une chambre principale contenant de la résine échangeuse d'ions. Ainsi l'eau passe à travers une colonne chargée de résine qui capte les ions en libérant en échange des ions hydroxyde (pour les ions négativement chargés : sulfate, carbonates, etc.) ou hydronium (pour les ions positifs : calcium, magnésium, autres métaux, etc.), qui se recombinent pour reformer de l'eau. Cette méthode de purification procure un grand volume d'eau très pure rapidement et en consommant peu d'énergie par rapport à la distillation par exemple. L'eau obtenue de cette façon est appelée « eau désionisée » ou « eau déminéralisée ». Cette déminéralisation par résine échangeuse permet une production à la demande. La résine est à lit mélangé avec un changement de couleur lorsque celle-ci est saturée, et l'utilisateur peut constater visuellement que la résine ne peut plus produire d'effet. Par réaction chimique la résine enlève le CaCo3 (tartre) de l'eau et la purifie.

Selon l'invention, la base peut comprendre un réservoir intermédiaire de fluide brut agencé en amont et en communication de fluide avec les moyens de déminéralisation et peut avoir le réservoir principal de fluide agencé en aval et en communication de fluide avec les moyens de déminéralisation. Ainsi la base comporte le réservoir intermédiaire dans lequel le fluide brut est introduit par l'utilisateur, ce fluide passe par les moyens de déminéralisation, et après déminéralisation, peut être stocké en tant que fluide épuré dans le réservoir principal. En usage de l'appareil de coiffure, le fluide épuré sera amené dans l'unité portable ou pièce à main permettant de traiter les cheveux.

Selon l'invention, le réservoir intermédiaire de fluide peut être agencé au moins partiellement plus élevé que les moyens de déminéralisation et les moyens de déminéralisation peuvent être agencés au moins partiellement plus élevés que le réservoir de fluide principal. En fonction du déplacement de fluide prédéfini, la gravité est utilisée pour acheminer le fluide à épurer. Au mieux, les trois pièces se suivent totalement séparées en termes de hauteur pour utiliser la gravité en totalité.

Selon l'invention, les moyens de déminéralisation peuvent comprendre une chambre principale contenant la résine, cette chambre principale étant détachable de la base pour remplacer la résine une fois inopérante. La chambre principale peut prendre la forme d'une cartouche ; elle peut occuper un volume d'environ 250 cm3, ceci permettant un remplacement, alerté par un changement de couleur, environ tous les 6 mois ou tous les 35L par une chambre contenant de la résine non utilisée.

Selon l'invention, les moyens de déminéralisation peuvent comprendre une chambre secondaire représentant un passage pour l'écoulement du fluide agencé en parallèle de la chambre principale. Ce shunt présente un double avantage : réduire la consommation de résine tout en assurant un degré de dureté du fluide faible qui n'entartrera pas dans un délai raisonnable les pièces de l'appareil en contact avec le fluide, i.e. les canalisations de fluide et surtout les moyens de vaporisation et les moyens de distribution de vapeur. Ainsi l'appareil et la cartouche de résine auront une durée de vie améliorée pour un coût faible et maitrisé au mieux. L'appareil permet d'utiliser de l'eau du robinet (sans que l'utilisateur n'emploie de l'eau déminéralisée), de mélanger l'eau purifiée douce avec l'eau brute dure selon un rapport prévu et pour produire une eau relativement douce et suffisante pour l'usage de l'appareil. Ainsi en utilisation, le fluide passe en partie au travers de la chambre principale et en partie au travers de la chambre secondaire branchée en shunt de la chambre principale, les fluides résultant se jetant tous les deux dans le réservoir principal pour se mélanger avant d'être acheminée dans l'appareil portable à vapeur. Le passage pour l'écoulement du fluide de la seconde chambre peut être une conduite de fluide

Selon l'invention, la chambre principale et la chambre secondaire des moyens de déminéralisation peuvent comporter chacune en entrée de fluide un premier et respectivement un deuxième moyen de réglage de débit permettant de régler un débit sensiblement identique d'entrée de fluide vers chaque chambre. Ces moyens de réglage de débit peuvent être un filtre à maille identique, assurant un débit maximum d'entrée de fluide (Qep, Qes) vers chaque chambre sensiblement identique pour une même section transversale d'entrée. Un tel moyen pour ajuster les 2 débits est nécessaire à cause des microbilles filtrantes de la résine dans la chambre principale qui limite la vitesse d'écoulement du fluide et peut avoir pour conséquence l'entrée de trop de fluide dans la chambre secondaire. Ainsi la vitesse d'écoulement s'équilibre.

Selon l'invention, le premier moyen de réglage de débit et le deuxième moyen de réglage de débit peuvent être un premier et un deuxième filtres de maille identique. Ceci permet d'équilibrer la vitesse d'écoulement de façon simple et peu chère.

Selon l'invention, le rapport de la valeur de la section transversale d'entrée de la chambre principale (Sp) sur la valeur de la section transversale d'entrée de la chambre secondaire (Ss) peut être égal au rapport du degré de dureté sur le degré de dureté visé pour le fluide sortant de la base. On part de la meilleure hypothèse où des filtres de maille identique sont utilisés en entrée, imprimant une même vitesse d'écoulement des fluides dans les deux chambres.

Selon l'invention, au moins une section parmi la section d'entrée de la chambre principale (Sp) et la section d'entrée de la chambre secondaire (Ss) peut être réglable manuellement. Ceci permet de régler le rapport en fonction du degré de dureté de la région d'utilisation de l'appareil qui varie selon les pays, et particulièrement selon les régions d'un même pays. Par exemple le degré est inférieur à 15°f en Corse et est supérieur à 35°f en Languedoc Roussillon.

Selon l'invention, la base peut présenter un couvercle supérieur avec une partie fixe couvrant les entrées des deux chambres et une partie mobile pour introduire le fluide dans la base. Ceci permet de rendre la fonction déminéralisation maitrisée et non visible pour l'utilisateur.

Selon l'invention, l'unité portable peut comprendre les moyens de vaporisation, la canalisation permettant le passage du fluide sous forme liquide depuis le réservoir principal vers les moyens de vaporisation. Les moyens de vaporisation sont alors dans l'appareil portable ou pièce à main et le fluide épuré est acheminé par le cordon de liaison entre la base et l'appareil portable.

Selon l'invention, les moyens de vaporisation du fluide peuvent être exclusivement prévus dans l'unité portable. Aucun élément de chauffe ne se trouve dans la base et ne viendra altérer les propriétés des moyens de déminéralisation.

Selon l'invention, l'unité portable peut comporter au moins une première surface de traitement destinée à entrer en contact avec les cheveux. Cette surface sert à la mise en forme des cheveux ― contrairement par exemple à un simple sèche-cheveux qui souffle de l'air chaud - et la surface de traitement peut être chauffée pour une meilleure mise en forme.

Selon l'invention, l'unité portable peut comporter une première mâchoire et une deuxième mâchoire disposées en regard l'une de l'autre, la première surface de traitement étant portée par la première mâchoire, une deuxième surface de traitement étant portée par la deuxième mâchoire, les mâchoires étant reliées de sorte à passer entre une position ouverte et une position fermée dans laquelle les surfaces pincent une mèche de cheveux. Ceci permet d'effectuer un pinçage ou une prise en « sandwich » des cheveux à traiter pour augmenter la qualité et la vitesse de traitement. L'appareil obtenu permet de pincer les cheveux et vaporiser de la vapeur vers les cheveux, opérations simultanées ou successives selon l'emplacement des orifices de vaporisation sur l'appareil.

Selon l'invention, la première surface et la deuxième surface de traitement des cheveux peuvent être des surfaces complémentaires plates ou courbes ou ondulées qui, en position fermée de l'appareil, viennent sensiblement en correspondance permettant ainsi de lisser, boucler ou respectivement gaufrer les cheveux.

### Brève description des dessins :

L'invention sera mieux comprise à l'étude des modes de réalisation pris à titre nullement limitatif et illustrés ici :
- La figure 1 illustre une vue d'un appareil selon l'invention,
- La figure 2 illustre une vue en coupe longitudinale de l'appareil selon l'invention,
- La figure 3 illustre une vue en coupe transversale de la base selon l'invention;
- Les figures 4 et respectivement 5 illustrent une vue en perspective de la base selon l'invention sans couvercle et respectivement avec couvercle;
- La figure 6 illustre une vue en coupe transversale du cordon selon l'invention.

### Exposé détaillé de l'invention :

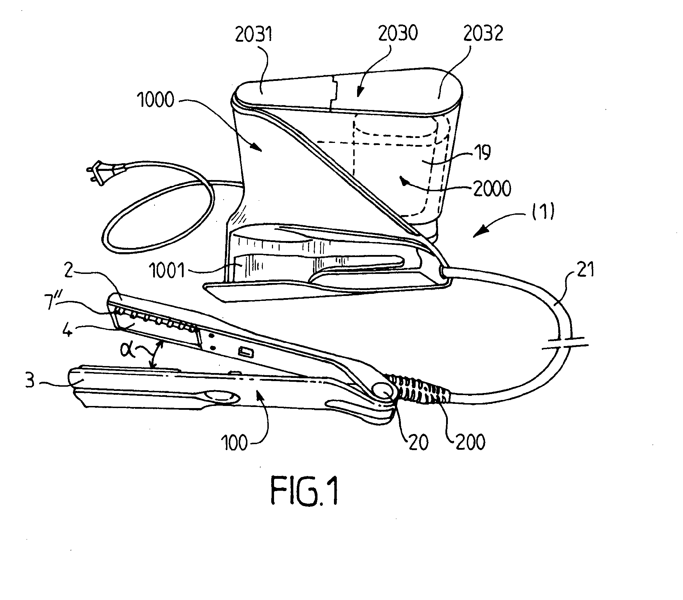

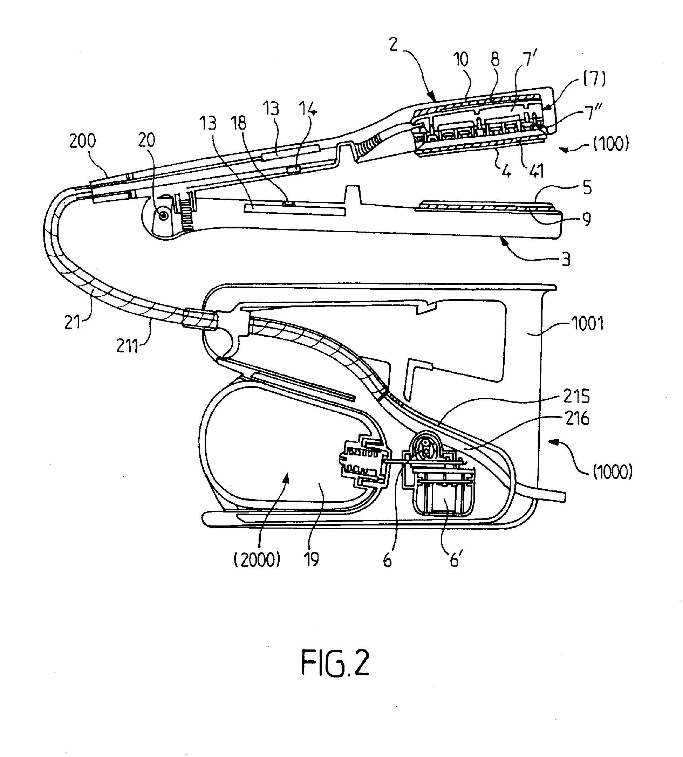

Comme illustré en figure 1 et 2 dont les références numériques correspondent, l'invention concerne un appareil 1 destiné à la mise en forme avec les cheveux comprenant une base 1000 comprenant un réservoir principal de fluide 19, une unité portable 100 comprenant des moyens de vaporisation du fluide 7, des moyens de distribution de la vapeur 7', 7" à destination des cheveux, un cordon 21 comportant au moins une canalisation destinée au passage de fluide et agencée entre le réservoir principal de fluide 19 et les moyens de vaporisation 7, l'unité portable 100 comprend uniquement ou au moins une première surface de traitement 4 destinée à venir en contact avec les cheveux et les moyens de vaporisation du fluide 7 sont exclusivement prévus dans l'unité portable 100. La base est dite « déportée » de l'unité portable, et posable sur un plan de travail. La base comporte un socle 1001 pour recevoir l'appareil portable ou pièce à main lorsqu'il n'est pas en usage, et comporte un couvercle ayant une partie fixe 2031 et une partie mobile en pivotement 2032 pour insérer le fluide. Le couvercle peut être totalement amovible pour remplacer les moyens de déminéralisation (cartouche) quand nécessaire. Une partie de la base peut être prévue transparente afin que l'utilisateur puisse visuellement être alerté que la résine échangeuse d'ions change de couleur car n'est plus opérante. Elle comporte des moyens de déminéralisation qui permettent de réduire la teneur en calcaire du fluide introduit dans la base. Ces moyens de déminéralisation sont agencés entre un réservoir intermédiaire qui reçoit le fluide « brut » et entre le réservoir principal qui contient le fluide « épuré » à destination de l'appareil de coiffure.

La canalisation destinée au passage du fluide (eau ou eau mélangée à un cosmétique fixatif...) est en matériau capable de transporter un fluide maintenu dans le réservoir à une température entre 15 et 30°C. Le matériau peut être en silicone ou en caoutchouc peu cher qui supporte des températures jusqu'à environ 30°C, sans devoir nécessairement être capable de supporter des températures d'eau chauffée ou de vapeur autour des 100°C.

Comme illustré en figure 2, l'unité portable 100 comprend des moyens de chauffage 41 pour chauffer la première surface de traitement 4. Il peut s'agit d'un élément chauffant 41 qui peut être une thermistance CTP (coefficient de température positif) ou une céramique qui est plaquée contre la surface de traitement 4 ou agencée à l'intérieur de l'élément comprenant la surface de traitement 4. Les moyens de vaporisation du fluide 7 comportent une chambre de vaporisation 7' et des moyens de chauffage 8 de la chambre de vaporisation 7'. La ou les chambres sont réalisées en aluminium, peuvent comporter des orifices de distribution de vapeur 7", et être plaquées en contact direct ou indirect contre l'élément de chauffage 8. Le bon écrasement de l'élément chauffant 8 et donc son fonctionnement optimal se fait par une lame ressort 7"' par exemple. Le capteur de température 10 peut être préférentiellement agencé au dessus de l'arrivée d'eau 21. Les moyens de chauffage 8 de la chambre de vaporisation peuvent être au moins un élément chauffant qui peut être une thermistance CTP ou une céramique qui est plaquée contre une des parois ou agencée à l'intérieur de l'élément formant la surface de traitement, ils peuvent être identiques ou séparés des moyens de chauffage de la surface de traitement. Les moyens de distribution de la vapeur 7', 7" présentent une série d'orifices 7" de sortie de vapeur agencée latéralement à la première surface de traitement 4, préférentiellement un peu en retrait de la surface de traitement 4. Alternativement ou additionnellement les moyens de distribution de la vapeur 7', 7" présentent une série d'orifices agencés sur la surface de traitement. Le débit en sortie de vapeur est d'environ entre 3 et 4g/min, plutôt environ égal à 3.5g/min

Comme illustré en figures 1 et 2, l'unité portable 100 comprend une première mâchoire 2 et une deuxième mâchoire 3 disposées en regard l'une de l'autre, la première surface de traitement 4 étant portée par la première mâchoire 2, une deuxième surface de traitement 5 portée par la deuxième mâchoire 3, les mâchoires étant reliées de sorte à passer d'une position ouverte à une position fermée de sorte que les surfaces 4,5 pincent une mèche de cheveux.

Comme illustré en figure 2, l'appareil a des moyens de chauffage 9 pour chauffer la deuxième surface de traitement 5 du même type que ceux 8 de la première surface de traitement 4. La première surface 4 et la deuxième surface 5 de traitement des cheveux sont des surfaces complémentaires illustrées plates qui, en position fermée de l'appareil, viennent sensiblement en correspondance mais peuvent être indifféremment ou courbes ou ondulées. Un appareil à boucler comme par exemple décrit dans le brevet EP0619087 ou encore EP2152114 peut être cité à titre d'exemple. Un appareil à boucler concerne un appareil de traitement et/ou de mise en forme des cheveux, de préférence à usage manuel, comportant agencé à partir d'un corps principal, un moyen de préhension, un corps d'enroulement pour les mèches de cheveux, monté de préférence libre à rotation sur le corps principal autour de son axe longitudinal et au moins une pince mobile pour le serrage de la mèche de cheveux sur le corps. Un appareil à gaufrer est un appareil muni de deux mâchoires en regard l'une de l'autre et avec chacune une surface de traitement non plane, décrit par exemple dans le brevet WO2008129172.

Comme illustré en figure 2, il est prévu des moyens de réglage de débit de fluide 6, par exemple une pompe 6préférentiellement péristaltique, agencés préférentiellement dans la base déportée et une unité de contrôle 13 pour commander au moins les moyens de réglage de débit de fluide 6 par un moteur 6'. La canalisation de fluide (eau ou eau mélangée à un cosmétique fixatif...) est composée d'un matériau souple tubulaire, en matériau capable de transporter un fluide maintenu dans le réservoir à une température entre 15 et 30°C. Le matériau peut être en silicone ou en caoutchouc ou EPDM (éthylène-propylène-diène monomère) ou TPV, peu cher, supportant des températures jusqu'à environ 30°C, sans devoir nécessairement être capable de supporter des températures d'eau chauffée ou de vapeur autour des 100°C. Le matériau est adapté pour résister à faible pression (pression atmosphérique environ 1000 mBar), il n'est pas nécessairement résistant à des pressions imposées par le passage de vapeur Jusqu'à 4 Bar.

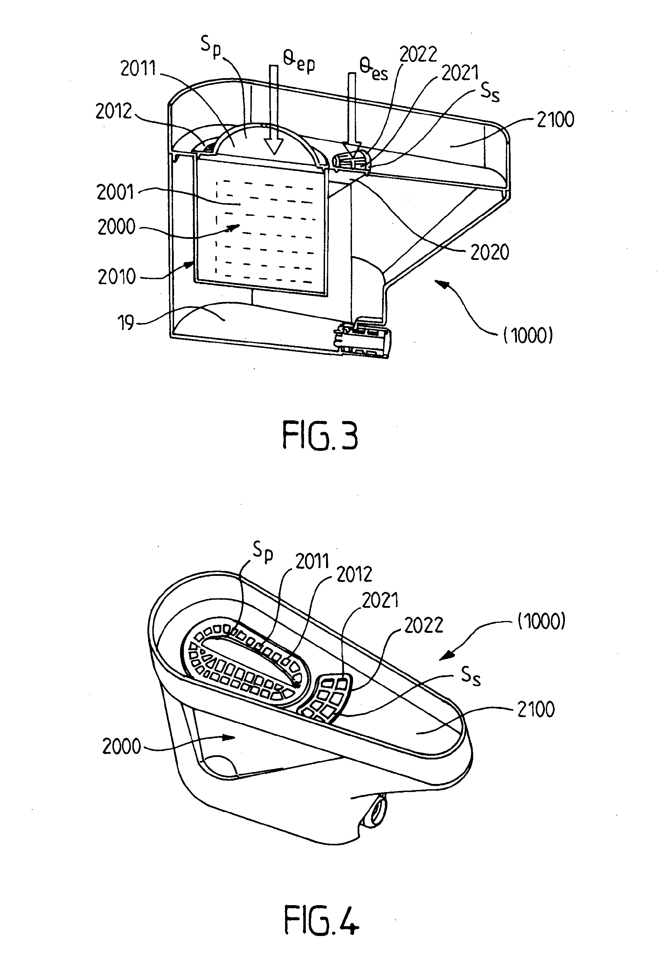

Comme illustré en figures 3, 4 et 5, la base 1000 comporte un réservoir principal de fluide 19, et des moyens de déminéralisation 2000 du fluide agencés en amont totalement au dessus du réservoir principal 19. Les moyens de déminéralisation 2000 comprennent une chambre principale 2010 contenant de la résine 2001 échangeuse d'ions, prévue pour un remplacement tous les 6 mois ou tous les 35L. Dans un premier mode de réalisation, la chambre principale 2010 est une cartouche totalement amovible de la base 1000, qui pourra être changée environ tous les 6 mois, jetée et remplacée par une cartouche identique. La résine est totalement piégée dans la cartouche et ne risque pas de circuler dans le réservoir intermédiaire 2100, dans la pompe ou dans la chambre de vapeur. Ceci permet aussi à l'utilisateur de ne jamais toucher directement la résine contenue dans la cartouche. La cartouche comprend un corps principal en tissu non tressé, une fenêtre maillée en nylon, un filtre supérieur en tissu non tressé et de la résine. Le tissu non tressé est composé de 80% de coton et 20% de polyester. Le porte résine contient la résine, est solidaire du filtre supérieur par soudure ultrason. La fenêtre est solidaire du porte résine par soudure à chaud. La densité de la fenêtre doit être suffisamment faible pour ne pas laisser passer les ions et suffisamment grande pour pouvoir visualiser le changement de couleur. La cartouche est située à l'intérieur de la base 1000. Dans un deuxième mode de réalisation, la chambre principale 2010 est intégrée à la base et présente un couvercle qui se positionne sur l'entrée 2011 et contient un filtre 2012. La base 1000 comprend un réservoir intermédiaire de fluide brut 2100 agencé en amont et en communication de fluide avec les moyens de déminéralisation 2000 via une grille-filtre en entrée et où le réservoir principal 19 de fluide est agencé en aval et en communication de fluide avec les moyens de déminéralisation 2000 via une grille-filtre en sortie. Le réservoir intermédiaire est relié étanche à la cartouche. Le réservoir intermédiaire de fluide 2100 est agencé au moins partiellement plus élevé que les moyens de déminéralisation 2000 et les moyens de déminéralisation 2000 sont agencés au moins partiellement plus élevés que le réservoir de fluide principal 19. Les moyens de déminéralisation 2000 comprennent une chambre principale 2010 contenant la résine 2001, cette chambre principale 2010 étant détachable de la base 1000 pour remplacer la résine une fois consommée. Les moyens de déminéralisation 2000 comprennent une chambre secondaire 2020 représentant une conduite de fluide montée en parallèle de la chambre principale 2010. La chambre principale 2010 et la chambre secondaire 2020 des moyens de déminéralisation 2000 comportent chacune en entrée de fluide 2011, 2021 un premier et respectivement un deuxième moyen de réglage de débit 2012 ; 2022 permettant de régler un débit sensiblement identique d'entrée de fluide vers chaque chambre 2010, 2020. Le premier moyen de réglage de débit 2012 et le deuxième moyen de réglage de débit 2022 sont un premier et deuxième filtres à maille identique. Un filtre en maille nylon peut être utilisé, avec pour diamètre du fil d'environ 0.06mm, la dimension de l'ouverture de maille étant de 0.25 par 0.25mm.

Le rapport de la valeur de la section transversale d'entrée de la chambre principale (Sp) sur la valeur de la section transversale d'entrée de la chambre secondaire (Ss) est égal au rapport du degré de dureté (par exemple pris égal à 26°f, degré moyen relevé pour la France) sur le degré de dureté visé pour l'appareil, par exemple pris égal à 7°f. On part de la meilleure hypothèse où des filtres de maille identique sont utilisés en entrée, imprimant une même vitesse d'écoulement des fluides dans les deux chambres. Le degré de dureté moyenne en France est d'environ 26°f . Le fluide sortant a un degré de dureté visé autour de 7°f en moyenne. Il s'agit d'une moyenne car le degré de dureté au début de l'usage de la résine est inférieur à 7 (peut être proche de 0), et le degré de dureté au début de l'usage de la résine est supérieur à 7°f (peut être proche de 14°f ). Ce degré de dureté choisi égal à 7°f correspond à l'usage de 35L d'eau au travers de l'appareil. Par exemple la surface de la section principale est égale à 1150mm² et a surface de la section secondaire est égale à 385mm².

En sortie de la chambre principale 2010 contenant la résine 2001 échangeuse d'ions peut être prévu un filtre de la même nature qu'en entrée : ce filtre a un maillage tel qu'il permet de faire couler le fluide sans laisser passer les micro billes de résine.

Au moins une section parmi la section d'entrée de la chambre principale (Sp) et la section d'entrée de la chambre secondaire (Ss) est réglable manuellement (non illustrée), par exemple par coulissement d'un couvercle ou positionnement d'un couvercle de taille différente ou encore tout autre moyen à la portée de l'homme du métier. La base 1000 présente un couvercle supérieur 2030 avec une partie fixe 2031 couvrant les entrées 2011, 2021 des deux chambres 2010,2020 et une partie mobile 2032 pour introduire le fluide dans la base. La partie 2032 est mobile par pivotement ou par coulissement ou tout autre moyen à la portée de l'homme du métier. Le couvercle 2030 complet peut être détachable de la base pour permettre le remplacement de la cartouche.

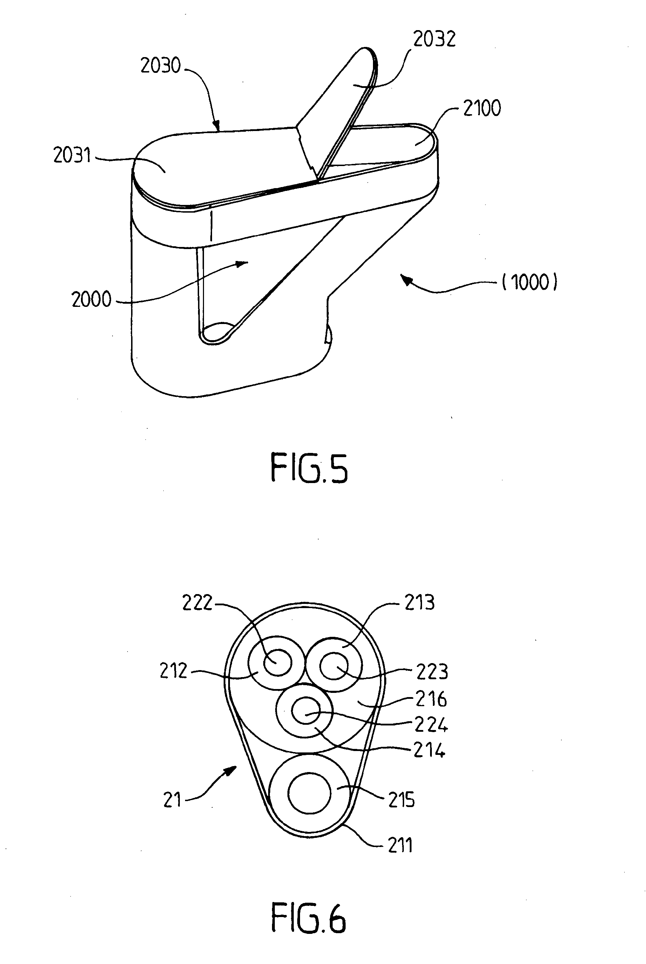

Comme illustré en figure 6, la canalisation de fluide 211 présente un diamètre intérieur préférentiellement sensiblement constant compris entre environ 0,5 et environ 3mm, préférentiellement entre 1 et 2.4 mm, préférentiellement égal à 1.2mm. Ceci permet un petit débit d'eau sans perte de charges. La longueur du cordon est dans une gamme de 1m à 5m, préférentiellement environ égale à 3 m. Au moins un premier câble électrique 212 renferme un premier fil conducteur 222 et un deuxième câble électrique 213 renfermant un deuxième fil conducteur 223, les deux câbles étant à l'intérieur du cordon 21 et permettant d'alimenter au moins l'unité de contrôle 13, voire aussi les éléments chauffants de la chambre de vaporisation et des surfaces de traitement : ces deux conducteurs permettent de faire passer une tension de 230V car ils sont isolés doublement par leur câble respectif 213 et 223 et par une gaine 216 : le premier conducteur 212 est la phase et le deuxième conducteur 213 est le neutre.

Le cordon est composé au moins partiellement d'un tissage, par exemple un tressage et/ou d'un surmoulage d'au moins la canalisation d'eau voire aussi de câbles électriques. Tous les conducteurs sont en double isolation. D'autres conducteurs pourraient être prévus pour un éclairage déporté ou toute autre application déportée à la portée de l'homme du métier.

Selon un mode détaillée de l'invention illustrée en figure 6, la canalisation de fluide 215 présente un diamètre interne de 1.2mm, un diamètre externe de 3.2mm ; les câbles électriques présentent un diamètre interne de 1mm, un diamètre externe de 2.4mm, les câbles sont à l'intérieur d'une gaine 214 dont le diamètre externe est de 6.8mm ; le tout étant dans un tressage d'épaisseur égale à 0.3mm dont la plus grande hauteur est de 10.6mm, la plus petite épaisseur est de 7.4mm, la distance entre le centre de la canalisation de fluide et le centre de l'ensemble des câbles est de 5.0 mm.

Comme illustré en figure 2, l'appareil comporte des moyens de détection 14, 18 du passage en position d'ouverture et/ou passage en position de fermeture et l'unité de contrôle est programmée pour recevoir depuis les moyens de détection 14, 18 un signal et pour commander, en réponse au signal, au moins la pompe 6. Les moyens de détection 14,18 peuvent être préférentiellement des moyens magnétiques de détection 14, 18 du passage en position d'ouverture et/ou passage en position de fermeture. Ils comprennent un interrupteur magnétique ; préférentiellement un interrupteur magnétique à lame souple 14 agencé dans la première mâchoire 2, un aimant 18 agencé dans la deuxième mâchoire 3 de sorte que l'aimant 18 soit actif sur l'interrupteur 14 dans une seule des deux positions.

La première mâchoire 2 et la deuxième mâchoire 3 sont reliées par une articulation de type charnière 20 et l'angle maximum (α) d'ouverture des deux mâchoires est compris entre 5° et 60°, voire entre 10° et 20°, et préférentiellement environ égal à 15°. De plus, l'appareil toujours illustré ici est position de repos « ouverte », mais il peut être en position de repos « fermée », comme illustré dans le brevet EP2145557 incorporé ici à titre de référence et décrivant un appareil de coiffure comportant deux mâchoires supportant chacune à une extrémité une surface de traitement dont au moins une comporte un élément chauffant, lesdites mâchoires étant montées pivotantes à l'autre extrémité autour d'une articulation entre une position d'ouverture permettant l'insertion des cheveux entre les deux surfaces de traitement et une position de fermeture pour leur mise en contact avec les deux surfaces de traitement, lesdites mâchoires formant entre les surfaces de traitement et l'articulation deux demi poignées, caractérisé en ce que l'appareil comporte des moyens de rappel des demi poignées qui provoquent la mise en pression des surfaces de traitement. L'axe de pivotement des deux mâchoires supportant les surfaces de traitement peut être placé à l'extrémité des mâchoires (comme illustré ici) ou être placé environ au milieu des mâchoires pour fournir un appareil à articulation du type « ciseaux ».

Les moyens de détection de température 10 mesurent une valeur représentant la température des moyens de vaporisation 7 et l'unité de contrôle peut être programmée pour recevoir depuis les moyens de détection de température 10 un signal et pour commander, en réponse au signal, au moins la pompe péristaltique 6. Les moyens de détection de température peuvent comprendre une thermistance, préférentiellement une thermistance à Coefficient de Température Négatif (CTN). La thermistance permet d'assurer une régulation de la chauffe.

### Description en fonctionnement de l'invention:

En fonctionnement préliminaire, c'est-à-dire sans brancher le chauffage de l'appareil, l'utilisateur peut si nécessaire retirer le couvercle total 2030 et changer la cartouche de résine 2001 si nécessaire, il peut si nécessaire modifier l'ouverture d'au moins une des entrées 2011, 2021 des moyens de déminéralisation. Une fois l'alimentation en fluide et/ou le réglage effectué, l'utilisateur va soulever le couvercle 2032 de la base, puis verser le fluide dans le réservoir intermédiaire 2100. Le fluide va rentrer dans la chambre principale 2010 des moyens de déminéralisation et aussi dans la chambre secondaire 2020 des moyens de déminéralisation. Après passage au travers des moyens de déminéralisation, tout le fluide converge dans le réservoir principal 19. La déminéralisation se fait ainsi à la demande. Quelques minutes sont nécessaires pour filtrer le volume maximal de fluide prévu dans l'appareil.

En fonctionnement, l'utilisateur va brancher l'alimentation électrique de l'appareil, l'élément chauffant type CTP ou céramique se met à chauffer les surfaces destinées à venir en contact avec les cheveux, et un élément chauffant séparé (ou le même élément chauffant) se met à chauffer les moyens de vaporisation 7, l'utilisateur saisit l'appareil et l'applique pour venir pincer la mèche de cheveux à traiter ; la position passe d'une position d'ouverture à une position de fermeture ; la détection, par exemple détection magnétique, de la fermeture s'effectue, le signal est transmis à la CPU qui, en réponse à ce signal, commande la pompe de la base qui alimente depuis le réservoir de liquide 19 via le cordon 21 les moyens de vaporisation créant ainsi la vapeur dans l'unité qui sera extraite via les moyens de distribution de la vapeur pour venir en contact avec la mèche de cheveux traitée. En tests, les débits de vapeur constatés sont entre environ 3 et environ 4g/min, plutôt environ égal à 3.5g.

### Avantages de l'invention:

L'invention apporte de nombreux avantages parmi lesquels proposer un appareil:
- avec des moyens compacts, automatiques, et pouvant assurer un traitement de qualité des cheveux, et augmenter la durée de vie du produit,
- pouvant assurer un débit continu voire constant de vapeur,
- augmentant la durée de vie du produit, et diminuant l'impact écologique de l'appareil,
- avec un fonctionnement sécurisé, fiable en fonctionnement permettant d'assurer un traitement de qualité des cheveux,
- pouvant assurer un débit continu voire constant de vapeur,
- solide, robuste en fonctionnement et assure un bon vieillissement ;
- efficace et/ou rapide en fonctionnement ;
- étanche en fonctionnement ;
- assurant un fonctionnement dans n'importe quelle position de l'appareil.
- permettant une utilisation aisée et pratique
- réalisé de manière simple et économique, y compris les éléments jetables,
- avec une structure simplifiée,
- industrialisé pour un faible coût,
- solide, robuste en fonctionnement et assurant un bon vieillissement par rapport aux déformations mécaniques par exemple.
- efficace et rapide en fonctionnement.
- étanche en fonctionnement,
- d'une utilisation aisée et pratique ;
- avec un fonctionnement dans les meilleures conditions de placement de la mèche de cheveux,
- permettant un traitement rapide de la chevelure,
- présentant moins de frottements non souhaités,
- pouvant déclencher l'élément un peu avant la fermeture ou l'ouverture complète de l'appareil pour augmenter l'efficacité du traitement,
- n'étant plus tributaire des déformations mécaniques des boitiers pour actionner un composant,
- n'assurant plus d'effort parasite par rapport à l'effort exercé par l'utilisateur à la fermeture ou l'ouverture,

Bien entendu, l'invention n'est nullement limitée aux modes de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil (1) à vapeur destiné à la mise en forme des cheveux comprenant:
- une base (1000) comportant un réservoir principal de fluide(19),
- une unité portable (100) pour la mise en forme des cheveux, déportée de la base (1000), l'unité comportant des moyens de distribution de la vapeur (7', 7") à destination des cheveux,
- un cordon (21) comportant au moins une canalisation (215) destinée à mettre en communication de fluide la base (1000) et l'unité portable (100),
- des moyens de vaporisation du fluide (7),
**Caractérisé en ce que** la base (1000) comporte des moyens de déminéralisation (2000) du fluide agencés en amont du réservoir principal (19).

2. Appareil selon la revendication précédente où les moyens de déminéralisation (2000) comprennent une chambre principale (2010) contenant de la résine (2001) échangeuse d'ions.

3. Appareil selon une des revendications précédentes où la base (1000) comprend un réservoir intermédiaire de fluide brut (2100) agencé en amont et en communication de fluide avec les moyens de déminéralisation (2000) et où le réservoir principal (19) de fluide est agencé en aval et en communication de fluide avec les moyens de déminéralisation (2000).

4. Appareil selon une des revendications précédentes où le réservoir intermédiaire de fluide (2100) est agencé au moins partiellement plus élevé que les moyens de déminéralisation (2000) et où les moyens de déminéralisation (2000) sont agencés au moins partiellement plus élevés que le réservoir de fluide principal (19).

5. Appareil selon une des revendications précédentes où les moyens de déminéralisation (2000) comprennent une chambre principale (2010) contenant la résine (2001), cette chambre principale (2010) étant détachable de la base (1000) pour remplacer la résine une fois inopérante.

6. Appareil selon la revendication 5 où les moyens de déminéralisation (2000) comprennent une chambre secondaire (2020) représentant un passage pour l'écoulement de fluide agencé en parallèle de la chambre principale (2010).

7. Appareil selon les revendications 2 et 6 où la chambre principale (2010) et la chambre secondaire (2020) des moyens de déminéralisation (2000) comportent chacune en entrée de fluide (2011, 2021) un premier et respectivement un deuxième moyen de réglage de débit (2012 ; 2022) permettant de régler un débit sensiblement identique d'entrée de fluide vers chaque chambre (2010, 2020).

8. Appareil selon la revendication précédente où le premier moyen de réglage de débit (2012) et le deuxième moyen de réglage de débit (2022) sont un premier et deuxième filtres de maille identique.

9. Appareil selon une des revendications 7 à 8 où le rapport de la valeur de la section transversale d'entrée de la chambre principale (Sp) sur la valeur de la section transversale d'entrée de la chambre secondaire (Ss) est égal au rapport du degré de dureté sur le degré de dureté visé pour le fluide sortant de la base (1000).

10. Appareil selon une des revendications 7 à 9 où au moins une section parmi la section d'entrée de la chambre principale (Sp) et la section d'entrée de la chambre secondaire (Ss) est réglable manuellement.

11. Appareil selon une des revendications 6 à 10 où la base (1000) présente un couvercle supérieur (2030) avec une partie fixe (2031) couvrant les entrées (2011,2021) des deux chambres (2010,2020) et une partie mobile (2032) pour introduire le fluide dans la base.

12. Appareil selon une des revendications précédentes où l'unité portable (100) comprend les moyens de vaporisation (7); la canalisation (215) permettant le passage du fluide sous forme liquide depuis le réservoir principal (19) vers les moyens de vaporisation (7).

13. Appareil selon une des revendications précédentes où les moyens de vaporisation du fluide (7) sont exclusivement prévus dans l'unité portable (100).

14. Appareil selon une des revendications précédentes où l'unité portable (100) comporte au moins une première surface de traitement (4) destinée à entrer en contact avec les cheveux.

15. Appareil selon une des revendications précédentes où l'unité portable (100) comporte une première mâchoire (2) et une deuxième mâchoire (3) disposées en regard l'une de l'autre, la première surface de traitement (4) étant portée par la première mâchoire, une deuxième surface de traitement (5) étant portée par la deuxième mâchoire, les mâchoires étant reliées de sorte à passer entre une position ouverte et une position fermée dans laquelle les surfaces (4, 5) pincent une mèche de cheveux.

16. Appareil selon la revendication précédente où la première surface (4) et la deuxième surface (5) de traitement des cheveux sont des surfaces complémentaires plates ou courbes ou ondulées qui, en position fermée de l'appareil, viennent sensiblement en correspondance permettant ainsi de lisser, boucler ou respectivement gaufrer les cheveux.

## Patentansprüche

1. Dampfgerät (1) zur Formgebung der Haare, das Folgendes umfasst:
- eine Basisstation (1000) mit einem Hauptfluidbehälter (19),
- eine tragbare Einheit (100) zur Formgebung der Haare, die zur Basisstation (1000) abgesetzt ist, wobei die Einheit Mittel (7', 7") zur Verteilung des für die Haare bestimmten Dampfes umfasst,
- eine Schnur (21) mit mindestens einer Leitung (215), die dafür vorgesehen ist, eine Fluidverbindung zwischen der Basisstation (1000) und der tragbaren Einheit (100) herzustellen,
- Mittel (7) zur Verdampfung des Fluids,
**dadurch gekennzeichnet, dass** die Basisstation (1000) Mittel (2000) zur Demineralisierung des Fluids umfasst, die dem Hauptbehälter (19) vorgelagert sind.

2. Gerät nach dem vorhergehenden Anspruch, wobei die Mittel (2000) zur Demineralisierung eine Hauptkammer (2010) umfassen, die Ionenaustauscherharz (2001) enthält.

3. Gerät nach einem der vorhergehenden Ansprüche, wobei die Basisstation (1000) einen Zwischenbehälter (2100) für Rohfluid umfasst, der den Mitteln (2000) zur Demineralisierung vorgelagert ist und in Fluidverbindung mit diesen steht, und wobei der Hauptfluidbehälter (19) den Mitteln (2000) zur Demineralisierung nachgelagert ist und mit diesen in Fluidverbindung steht.

4. Gerät nach einem der vorhergehenden Ansprüche, wobei der Zwischenfluidbehälter (2100) zumindest teilweise höher angeordnet ist als die Mittel (2000) zur Demineralisierung und wobei die Mittel (2000) zur Demineralisierung zumindest teilweise höher angeordnet sind als der Hauptfluidbehälter (19).

5. Gerät nach einem der vorhergehenden Ansprüche, wobei die Mittel (2000) zur Demineralisierung eine Hauptkammer (2010) umfassen, die das Harz (2001) enthält, wobei diese Hauptkammer (2010) von der Basisstation (1000) abgenommen werden kann, um das unwirksam gewordene Harz auszutauschen.

6. Gerät nach Anspruch 5, wobei die Mittel (2000) zur Demineralisierung eine Nebenkammer (2020) umfassen, die einen parallel zur Hauptkammer (2010) angeordneten Durchlass für den Durchfluss von Fluid darstellt.

7. Gerät nach den Ansprüchen 2 und 6, wobei die Hauptkammer (2010) und die Nebenkammer (2020) der Mittel (2000) zur Demineralisierung jeweils am Fluideinlass (2011, 2021) erste bzw. zweite Mittel (2012, 2022) zur Regelung des Durchflusses umfassen, mit denen sich eine im Wesentlichen identische Fluideintrittsmenge in jede Kammer (2010, 2020) regeln lässt.

8. Gerät nach dem vorhergehenden Anspruch, wobei die ersten Mittel (2012) zur Regelung des Durchflusses und die zweiten Mittel (2022) zur Regelung des Durchflusses ein erstes und ein zweites Filter mit identischer Maschengröße sind.

9. Gerät nach einem der Ansprüche 7 bis 8, wobei das Verhältnis des Wertes des Eingangsquerschnitts der Hauptkammer (Sp) zu dem Wert des Eingangsquerschnitts der Nebenkammer (Ss) dem Verhältnis des Härtegrades zu dem angestrebten Härtegrad des die Basisstation (1000) verlassenden Fluids entspricht.

10. Gerät nach einem der Ansprüche 7 bis 9, wobei zumindest ein Querschnitt von dem Eingangsquerschnitt der Hauptkammer (Sp) und dem Eingangsquerschnitt der Nebenkammer (Ss) manuell einstellbar ist.

11. Gerät nach einem der Ansprüche 6 bis 10, wobei die Basisstation (1000) einen oberen Deckel (2030) mit einem feststehenden Teil (2031), der die Einlässe (2011, 2021) der beiden Kammern (2010, 2020) abdeckt, und einen beweglichen Teil (2032) zum Einfüllen des Fluids in die Basisstation umfasst.

12. Gerät nach einem der vorhergehenden Ansprüche, wobei die tragbare Einheit (100) Verdampfungsmittel (7) umfasst, wobei die Leitung (215) den Durchfluss des Fluids in flüssiger Form vom Hauptbehälter (19) zu den Verdampfungsmitteln (7) ermöglicht.

13. Gerät nach einem der vorhergehenden Ansprüche, wobei die Mittel (7) zur Verdampfung des Fluids ausschließlich in der tragbaren Einheit (100) vorgesehen sind.

14. Gerät nach einem der vorhergehenden Ansprüche, wobei die tragbare Einheit (100) mindestens eine erste Behandlungsfläche (4) umfasst, die dafür vorgesehen ist, mit den Haaren in Berührung zu kommen.

15. Gerät nach einem der vorhergehenden Ansprüche, wobei die tragbare Einheit (100) eine erste Backe (2) und eine zweite Backe (3) umfasst, die einander gegenüberliegend angeordnet sind, wobei die erste Behandlungsfläche (4) von der ersten Backe getragen wird, wobei eine zweite Behandlungsfläche (5) von der zweiten Backe getragen wird, wobei die Backen derart miteinander verbunden sind, dass sie zwischen einer geöffneten Stellung und einer geschlossenen Stellung bewegt werden können, in der die Flächen (4, 5) eine Haarsträhne einklemmen.

16. Gerät nach dem vorhergehenden Anspruch, wobei die erste Fläche (4) und die zweite Fläche (5) zur Behandlung der Haare sich ergänzende ebene oder gekrümmte oder gewellte Flächen sind, die in der geschlossenen Stellung des Geräts im Wesentlichen in Übereinstimmung gelangen, sodass sie das Glätten, Locken bzw. Gaufrieren der Haare gestatten.

## Claims

1. Steam appliance (1) intended for shaping the hair comprising:
- a base (1000) having a main fluid tank (19),
- a portable unit (100) for shaping the hair, remote from the base (1000), the unit comprising means for distributing steam (7', 7") to the hair,
- a cord (21) having at least one pipe (215) to allow fluid to communicate between the base (1000) and the portable unit (100),
- fluid vaporisation means (7).
**Characterised in that** the base (1000) comprises fluid demineralisation means (2000) arranged upstream from the main tank (19).

2. Appliance according to the preceding claim, wherein the demineralisation means (2000) comprise a main chamber (2010) containing ion exchange resin (2001).

3. Appliance according to one of the preceding claims, wherein the base (1000) comprises an intermediate untreated fluid container (2100) arranged upstream from and in fluid communication with the demineralisation means (2000) and wherein the main fluid tank (19) is arranged downstream from and in fluid communication with the demineralisation means (2000).

4. Appliance according to one of the preceding claims, wherein the intermediate fluid tank (2100) is arranged at least partially higher than the demineralisation means (2000) and wherein the demineralisation means (2000) are arranged at least partially higher than the main fluid tank (19).

5. Appliance according to one of the preceding claims, wherein the demineralisation means (2000) comprise a main chamber (2010) containing the resin (2001), this main chamber (2010) being detachable from the base (1000) to replace the resin once inoperative.

6. Appliance according to claim 5, wherein the demineralisation means (2000) comprise a secondary chamber (2020) representing a passage for fluid flow arranged in parallel with the main chamber (2010).

7. Appliance according to claims 2 and 6, wherein the main chamber (2010) and the secondary chamber (2020) of the demineralisation means (2000) each comprise at fluid inlet (2011, 2021) a first and respectively a second flow control means (2012, 2022) for adjusting substantially equal fluid inlet rates to each chamber (2010, 2020).

8. Appliance according to the preceding claim, wherein the first flow control means (2012) and the second flow control means (2022) are first and second filters of identical mesh.

9. Appliance according to one of claims 7 to 8, wherein the ratio of the value of the main chamber inlet cross-section (Sp) to the value of the secondary chamber inlet cross-section (Ss) is equal to the ratio of the degree of hardness to the targeted degree of hardness for the fluid leaving the base (1000).

10. Appliance according to one of claims 7 to 9, wherein at least one cross-section from the main chamber inlet cross-section (Sp) and the secondary chamber inlet cross-section (Ss) can be adjusted manually.

11. Appliance according to one of claims 6 to 10, wherein the base (1000) has a top lid (2030) with a fixed part (2031) covering the inlets (2011, 2021) of the two chambers (2010, 2020) and a mobile part (2032) for introducing the fluid into the base.

12. Appliance according to one of the preceding claim, wherein the portable unit (100) comprises the vaporisation means (7): the pipe (215) allowing fluid to flow in liquid form from the main tank (19) to the vaporisation means (7).

13. Appliance according to one of the preceding claims, wherein the fluid vaporisation means (7) are provided exclusively in the portable unit (100).

14. Appliance according to one of preceding claims, wherein the portable unit (100) comprises at least a first treatment surface (4) intended to come into contact with the hair.

15. Appliance according to one of the preceding claims, wherein the portable unit (100) comprises a first jaw (2) and a second jaw (3) arranged opposite each other, the first treatment surface (4) being carried by the first jaw, a second treatment surface (5) being carried by the second jaw, the jaws being connected so as to move between an open position and a closed position in which the surfaces (4, 5) grip a lock of hair.

16. Appliance according to the preceding claim, wherein the first surface (4) and the second surface (5) for treating hair are flat or curved or wavy complementary surfaces which, in the closed position of the appliance, substantially correspond with each other in order to smooth, curl or crimp hair respectively.
